# EUROPÄISCHE PATENTSCHRIFT

(11) **EP 4 178 808 B1**
(45) Veröffentlichungstag und Bekanntmachung des Hinweises auf die Patenterteilung: **04.06.2025**
(21) Anmeldenummer: 21737566.6
(22) Anmeldetag: 02.07.2021
(51) Int. Cl.: B42D 25/305, B42D 25/324, B42D 25/328, B42D 25/36, G06K 19/06, B42D 25/369, B42D 25/373, B42D 25/378, B42D 25/382, B42D 25/351

(54) **OPTISCH VARIABLES SICHERHEITSELEMENT**
OPTICALLY VARIABLE SECURITY ELEMENT
ÉLÉMENT DE SÉCURITÉ OPTIQUEMENT VARIABLE

(30) Priorität: 07.07.2020 DE 102020004091
(43) Veröffentlichungstag der Anmeldung: 17.05.2023
(73) Patentinhaber: Giesecke+Devrient Currency Technology GmbH, 81677 München (DE)
(72) Erfinder: PFEIFFER, Matthias, 81675 München (DE); SATTLER, Tobias, 83607 Holzkirchen (DE)
(74) Vertreter: Zeuner, Stefan
(86) Internationale Anmeldenummer: PCT/EP2021/025243
(87) Internationale Veröffentlichungsnummer: WO 2022/008098

(56) Entgegenhaltungen:
- WO-A1-03/053713
- WO-A1-03/053713
- WO-A1-2020/011391
- WO-A1-2020/011391
- DE-A1- 102007 019 522
- DE-A1- 102007 019 522

## Beschreibung

Die Erfindung betrifft ein optisch variables Sicherheitselement zur Absicherung von Wertgegenständen, dessen Flächenausdehnung eine darauf senkrecht stehende z-Achse definiert, mit einem reflektiven Flächenbereich, der zumindest zwei, aus unterschiedlichen Betrachtungsrichtungen erkennbare Erscheinungsbilder zeigt.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können. Dazu sind die Sicherheitselemente mit optisch variablen Elementen ausgestattet, die dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/oder ein anderes grafisches Motiv zeigen. Im Stand der Technik sind dabei als optisch variable Effekte beispielsweise Bewegungseffekte, Pumpeffekte, Tiefeneffekte oder Flipeffekte beschrieben, die mit Hilfe von Hologrammen, Mikrolinsen oder Mikrospiegeln realisiert werden.

Vor einiger Zeit wurden optisch variable Sicherheitselemente vorgeschlagen, die zwei, in unterschiedlichen Höhenstufen angeordnete und jeweils mit einer Farbbeschichtung versehene Reliefstrukturen aufweisen (siehe WO 2020/011390 A1, WO 2020/011391 A1 und WO 2020/011392 A2). Die Farbbeschichtung der höher liegenden Reliefstruktur ist dabei entweder als Raster strukturiert oder mit Aussparungen versehen, so dass bei der Betrachtung des Sicherheitselements in den Rasterzwischenräumen bzw. Aussparungen die Farbbeschichtung der tiefer liegenden Reliefstruktur in Erscheinung tritt.

Ausgehend davon liegt der Erfindung die Aufgabe zugrunde, gattungsgemäße optisch variable Sicherheitselemente mit erhöhter Fälschungssicherheit anzugeben.

Diese Aufgabe wird durch die Merkmale der unabhängigen Ansprüche gelöst. Weiterbildungen der Erfindung sind Gegenstand der abhängigen Ansprüche.

Die Erfindung enthält zur Lösung der genannten Aufgabe das optisch variable Sicherheitselement des Anspruchs 1 und das optisch variable Sicherheitselement des Anspruchs 6.

Die Schicht mit dem zumindest einem maschinenlesbaren Merkmalsstoff wird nachfolgend auch als maschinenlesbares Echtheitsmerkmal bezeichnet. Das Sicherheitselement kann auch zwei oder mehr vollflächig oder bereichsweise vorgesehene Schichten mit jeweils zumindest einem maschinenlesbaren Merkmalsstoff enthalten kann, die vorzugsweise alle innenliegend in dem Sicherheitselement angeordnet sind. "Innenliegend" bedeutet dabei, dass das maschinenlesbare Echtheitsmerkmal von zumindest einer weiteren Schicht des Sicherheitselements bedeckt ist. Dabei kann es sich um eine der farbgebenden Schichten des Aufbaus, aber beispielsweise auch um eine Reflektorschicht, eine Schutzlackschicht, eine Primerschicht oder eine Heißsiegelschicht des Sicherheitselements handeln. Das maschinenlesbare Echtheitsmerkmal ist durch seine Innenlage sehr umlaufbeständig und gegen manipulative Angriffe geschützt. Insbesondere schützt die innenliegende Anordnung das maschinenlesbare Echtheitsmerkmal vor mechanischen und physikalischen Einflüssen, wie Abtrieb oder Knittern, und gegen chemische Einflüsse, wie etwa Feuchtigkeit, Schweiß oder die Effekte von Sonneneinstrahlung.

Mit besonderem Vorteil ist zumindest ein maschinenlesbarer Merkmalsstoff in den die unterschiedlichen Erscheinungsbilder erzeugenden Schichtaufbau integriert. Dieser Schichtaufbau umfasst die reflexionserhöhenden Beschichtungen, die Lackschichten, in denen die höher liegende und tiefer liegende Reliefstruktur abgeformt sind, sowie eventuelle farbgebende Deck- oder Zwischenschichten der Reliefstrukturen. Durch die Integration des maschinenlesbaren Merkmalsstoffs in den die unterschiedlichen Erscheinungsbilder erzeugenden Schichtaufbau werden Echtheitsmerkmale verschiedener Stufen ineinander verwoben, und dadurch eine besonders hohe Hürde für potentielle Nachahmer aufgebaut.

In einer vorteilhaften Ausgestaltung liegt zumindest ein maschinenlesbarer Merkmalsstoff vollflächig oder bereichsweise in einer ebenen Schicht des Sicherheitselements vor. Eine solche ebene Schicht kann nicht nur zwischen den Reliefstrukturen angeordnet sein, sondern insbesondere auch auf einer eine Reliefstruktur einebnenden Deckschicht oder einer Trägerfolie vorliegen.

Bevorzugt ist bei dem Sicherheitselement vorgesehen, dass die höher liegende und/oder die tiefer liegende reflexionserhöhende Beschichtung vollflächig oder bereichsweise zumindest einen maschinenlesbaren Merkmalsstoff enthalten. Besteht die reflexionserhöhende Beschichtung aus mehreren Teilschichten, kann jede der Teilschichten einen maschinenlesbaren Merkmalsstoff enthalten. Umfasst die reflexionserhöhende Beschichtung beispielsweise eine lasierende Farbe mit einer unterlegten Metallisierung, kann ein maschinenlesbarer Merkmalsstoff der lasierenden Farbe beigemischt sein, ein maschinenlesbarer Merkmalsstoff kann durch die unterlegte Metallisierung gebildet sein (beispielsweise kann der Merkmalsstoff durch ein vollflächig oder bereichsweise aufgebrachtes magnetisches Metall gebildet sein), oder ein Merkmalsstoff kann in einer zusätzlichen Schicht vorliegen, die vollflächig oder bereichsweise zusätzlich zur lasierenden Farbe und zur Metallisierung als Teil der reflexionserhöhenden Beschichtung vorgesehen ist.

In dem in Anspruch 6 beanspruchten Aspekt der Erfindung ist vorgesehen, dass die höher liegende Reliefstruktur durch eine Prägelackschicht gebildet ist, deren Prägelack zumindest einen maschinenlesbaren Merkmalsstoff enthält. Alternativ oder zusätzlich kann die tiefer liegende Reliefstruktur durch eine Prägelackschicht gebildet sein, deren Prägelack zumindest einen maschinenlesbaren Merkmalsstoff enthält. Die Prägelackschichten sind dabei vorteilhaft farblos transparent oder lasierend eingefärbt.

Der zumindest eine maschinenlesbare Merkmalsstoff bildet mit Vorteil eine Codierung, die beispielsweise eine Währung, eine Serie, eine Denomination, und/ oder eine Charge des Sicherheitselements angibt.

Als maschinenlesbare Merkmalsstoffe kommen bevorzugt IR-absorbierende, IR-transparente, magnetische, elektrisch leitfähige und/ oder lumineszierende, insbesondere phosphoreszierende Merkmalsstoffe zum Einsatz.

Besonders bevorzugt sind maschinenlesbaren Merkmalsstoffe, die im sichtbaren Spektralbereich transparent sind, wie etwa transparente IR-Absorber, transparente organische leitfähige Stoffe oder transparente magnetische Materialien. Diese Merkmalsstoffe können beispielsweise in Deckschichten, Prägelackschichten oder Farbbeschichtungen eingesetzt werden, die durch der Betrachter hindurchblicken muss. Mit ihnen können dem Sicherheitselement maschinenlesbare Eigenschaften verliehen werden, ohne das visuelle Erscheinungsbild zu beeinträchtigen oder zu verändern. Farbige maschinenlesbare Merkmalsstoffe können ebenfalls eingesetzt werden und dabei gezielt zur Gesamtfarbwirkung des Sicherheitselements beitragen.

Beispiele für geeignete maschinenlesbare IR-Substanzen sind etwa in der Druckschrift WO 2007/ 060133 A1 angegeben. Insbesondere kommen Eisen (II)- und Kupfer (II)-Verbindungen mit einem Fe²⁺-Ion oder einem Cu²⁺-Ion in einer geeigneten chemischen Umgebung in Frage, wobei eine geeignete chemische Umgebung beispielsweise ein Phosphation oder ein Polyphosphation oder, allgemeiner, eine Phosphor und Sauerstoff enthaltende Gruppe ist. Diese breitbandig im NIR-Bereich (700 nm bis 1100 nm) absorbierenden IR- Substanzen sind im sichtbaren Bereich (400 nm bis 700 nm) des elektromagnetischen Spektrums transparent, wobei sie höchstens eine leicht gelbliche oder bläuliche Tönung aufweisen.

Besonders gut geeignete maschinenlesbare IR-Substanzen sind die von SICPA (SICPA SA, Ave de Florian 41,1008 Prilly, Schweiz) vertriebenen Pigmente und die unter dem Handelsnamen SICPATALK vertriebenen Drucktinten, wie etwa SICPATALK^{®} CBA und SICPATALK^{®} NFB. Letztere sind im sichtbaren Spektralbereich nahezu farblos und daher für einen Betrachter im Wesentlichen unsichtbar. SICPATALK^{®} CBA weist eine breitbandige Absorption oberhalb von 1100 nm auf, während SICPATALK^{®} NFB eine breitbandige Absorption mit Zentrum zwischen 950 nm und 980 nm aufweist.

Ein maschinenlesbarer Merkmalsstoff kann auch durch seltene Erden gebildet sein, die in das Substrat des Sicherheitselements eingebracht werden und deren Vorhandensein mit speziellen Sensoren erfasst werden kann.

Ein weiteres geeignetes maschinenlesbares Merkmal besteht in einer metallischen Schicht mit Längsschlitzen, die für THz-Strahlung transparent sind. Die Längsschlitze können dabei (quasi-)periodisch mit einer Periode von 8 µm bis 200 µm, bevorzugt 10 µm bis 100 µm angeordnet sein und eine Breite haben, die kleiner als 1/5, bevorzugt kleiner als 1/10 der Periode ist.

In dem in Anspruch 1 beanspruchten Aspekt der Erfindung enthält das Sicherheitselement ein Echtheitsmerkmal mit zwei oder mehr unterschiedliche maschinenlesbaren Merkmalsstoffen, insbesondere ein Echtheitsmerkmal mit zwei oder mehr IR-absorbierenden Merkmalsstoffen, die in verschiedenen IR-Wellenlängenbereichen absorbieren, ein Echtheitsmerkmal mit zwei oder mehr magnetischen Merkmalsstoffen mit unterschiedlichen magnetischen Eigenschaften, insbesondere unterschiedlicher Koerzitivität, oder ein Echtheitsmerkmal mit zwei oder mehr lumineszierenden Merkmalsstoffen, die mit unterschiedlichem Emissionsspektrum lumineszieren, oder bei unterschiedlichen Wellenlängen anregbar sind. Durch den Einsatz mehrerer unterschiedlicher Merkmalsstoffe wird sowohl die Codedichte als auch die Fälschungssicherheit des Elements erhöht.

Selbstverständlich können auch maschinenlesbare Merkmalsstoffe unterschiedlicher Art, beispielsweise ein IR-absorbierender und ein magnetischer Merkmalsstoff kombiniert werden.

Zumindest ein maschinenlesbarer Merkmalsstoff liegt zweckmäßig in einer Druckfarbe, insbesondere einer Pigmentdruckfarbe vor. Alternativ oder zusätzlich liegt zweckmäßig zumindest ein maschinenlesbarer Merkmalsstoff in einer Aufdampffschicht vor. Beispielsweise kann ein magnetisches Metall als reflexionserhöhende Beschichtung oder als Teil einer solchen Beschichtung aufgedampft werden um ein maschinenlesbares Echtheitsmerkmal zu bilden.

In einer vorteilhaften Ausgestaltung sind die höher liegende Reliefstruktur und/oder die tiefer liegende Reliefstruktur durch Mikrospiegelanordnungen mit gerichtet reflektierenden Mikrospiegeln gebildet, insbesondere mit nichtdiffraktiv wirkenden Spiegeln, und vorzugsweise mit planen Spiegeln, Hohlspiegeln und/oder fresnelartigen Spiegeln. Die lateralen Abmessungen der Mikrospiegel liegen dabei zweckmäßig unterhalb von 50 µm, vorteilhaft unterhalb von 20 µm, bevorzugt bei etwa 10 µm, also zwischen 7 µm und 13 µm. Auf der anderen Seite liegen die lateralen Abmessungen der Mikrospiegel aber auch oberhalb von 2 µm, insbesondere oberhalb von 3 µm oder sogar oberhalb von 5 µm. Die Ganghöhe der Mikrospiegel beträgt vorzugsweise weniger als 10 µm, bevorzugt weniger als 5 µm.

Grundsätzlich können anstelle von Mikrospiegeln auch andere geprägte Reliefstrukturen, insbesondere Fresnellinsen, Hohlspiegel, Hologrammstrukturen, Nanostrukturen oder diffraktive geblazte Gitter eingesetzt werden. Vorteilhaft können auch achromatische Beugungsgitter, sogenannte Mattstrukturen verwendet werden, die im Wesentlichen weißes Licht reflektieren. Zur Erzeugung bunter Farben können die Reliefstrukturen zumindest der zweiten Reliefstruktur auch Subwellenstrukturen, insbesondere Subwellenlängengitter, aufweisen, die in Kombination mit der jeweiligen reflexionserhöhenden Schicht deren Farbe bestimmt oder zumindest mitbestimmt.

Mit Vorteil ist die höher liegende Reliefstruktur ausgelegt und ausgebildet, um einen ersten optisch variablen Effekt in einer ersten Farbe zu zeigen, und die tiefer liegende Reliefstruktur ist ausgelegt und ausgebildet, in den Bereichen, in denen sie sichtbar ist, einen zweiten optisch variablen Effekt in einer zweiten, unterschiedlichen Farbe zu zeigen. Die unterschiedlichen Farbwirkungen können auf unterschiedliche Weise erzeugt werden, wobei vorteilhafte Varianten nachfolgend genauer beschrieben.

Zumindest eine der reflexionserhöhenden Schichten ist mit Vorteil durch eine reflektierende Farbbeschichtung gebildet, insbesondere durch eine Metallisierung, einen Dünnschichtaufbau, durch eine mit einer Metallisierung hinterlegte lasierende Farbe, durch eine Lumineszenzfarbe mit einer metallischen Verspiegelung, durch eine Strukturfarbe und/oder durch eine Nanopartikelfarbe.

In einer vorteilhaften Ausgestaltung ist die höher liegende reflexionserhöhende Beschichtung zumindest in einem Teilbereich des Flächenbereichs als regelmäßiges oder unregelmäßiges Raster mit Rasterelementen und Rasterzwischenräumen ausgebildet, wobei die Abmessungen der Rasterelemente und Rasterzwischenräume in einer oder beiden lateralen Richtungen unterhalb von 140 µm, vorzugsweise zwischen 20 µm und 100 µm, insbesondere zwischen 20 µm und 60 µm liegen. Das Raster weist vorteilhaft eine konstante Flächendeckung durch die Rasterelemente auf, welche zweckmäßig zwischen 30% und 70%, vorzugsweise zwischen 40% und 60%, insbesondere bei etwa 50% liegt.

Alternativ oder zusätzlich ist vorteilhaft vorgesehen, dass die höher liegende reflexionserhöhende Beschichtung zumindest in einem Teilbereich des Flächenbereichs als Effektbereich ausgebildet ist, in dem die Lackbereiche und/oder die Freibereiche laterale Abmessungen von mehr als 140 µm aufweisen, vorzugsweise von mehr als 250 µm, weiter vorzugsweise von mehr als 500 µm und insbesondere von mehr als 1 mm. In diesen Effektbereichen zeigt das Sicherheitselement vorzugsweise zwei unterschiedliche Effekte (beispielsweise ein dreidimensionales Motiv und einen Bewegungseffekt wie einen laufenden Balken), die in zwei unterschiedlichen Farben in Erscheinung treten. Die Bereiche unterschiedlichen Farbeindrucks und unterschiedlicher Effekte sind dabei exakt zueinander gepassert, was nachfolgend auch als Farbe-zu-Effekt-Passerung bezeichnet wird.

In einer vorteilhaften Ausgestaltung bedeckt die reflexionserhöhende Schicht der tiefer liegenden Reliefstruktur diese vollständig. Alternativ können auch Negativkennzeichen in dem Sicherheitselement vorgesehen sein, die durch Aussparungen in der reflexionserhöhenden Schicht gebildet sind. Die Negativkennzeichen können beispielsweise Text, Symbole oder Wertzahlen bilden.

Das Sicherheitselement ist mit Vorteil ein Sicherheitsfaden, insbesondere ein Fenstersicherheitsfaden oder ein Pendelsicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen.

Die Erfindung enthält auch einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen optisch variablen Sicherheitselement,
- Fig. 2: einen Ausschnitt eines Sicherheitselements im Querschnitt,
- Fig. 3: ein Sicherheitselement mit einem maschinenlesbaren Echtheitsmerkmal in Form einer ebenen Schicht,
- Fig. 4 und 5: zwei weitere Varianten, die ein maschinenlesbares Echtheitsmerkmal in Form einer ebenen Schicht enthalten,
- Fig. 6: in (a) und (b) schematisch den grundsätzlichen Aufbau maschinenlesbarer optisch variabler Sicherheitselemente nach der vorliegenden Erfindung, und
- Fig. 7 bis 16: mit Ausnahme von Fig. 15 konkrete Ausgestaltungen erfindungsgemäßer Sicherheitselemente.

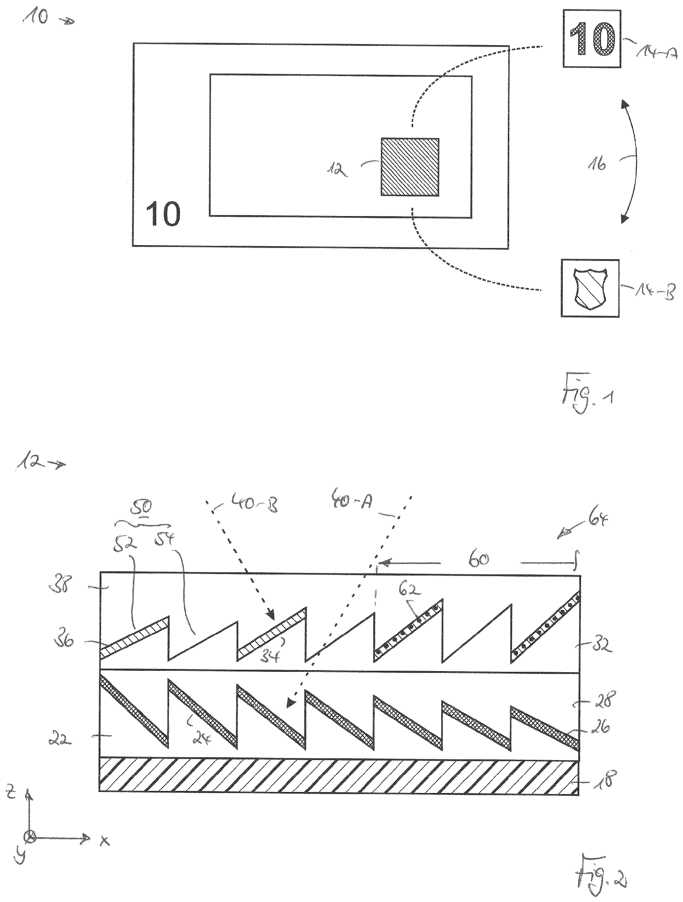

Die Erfindung wird nun am Beispiel von Sicherheitselementen für Banknoten erläutert. Figur 1 zeigt dazu eine schematische Darstellung einer Banknote 10 mit einem erfindungsgemäßen optisch variablen Sicherheitselement 12 in Form eines aufgeklebten Transferelements. Es versteht sich allerdings, dass die Erfindung nicht auf Transferelemente und Banknoten beschränkt ist, sondern bei allen Arten von Sicherheitselementen eingesetzt werden kann, beispielsweise bei Etiketten auf Waren und Verpackungen oder bei der Absicherung von Dokumenten, Ausweisen, Pässen, Kreditkarten, Gesundheitskarten und dergleichen. Bei Banknoten und ähnlichen Dokumenten kommen neben Transferelementen (wie Patches mit oder ohne eigene Trägerschicht) insbesondere auch Sicherheitsfäden oder Sicherheitsstreifen in Betracht.

Das in Fig. 1 gezeigte Sicherheitselement 12 vermittelt dem Betrachter trotz seiner flachen Ausbildung einen dreidimensionalen Eindruck und zeigt zugleich einen binären Farb- und Effektwechsel beim Kippen der Banknote 10. Dabei zeigt das Sicherheitselement 12 aus einer ersten Betrachtungsrichtung ein erstes, sich scheinbar aus der Ebene der Banknote 10 herauswölbendes Motiv 14-A, konkret beispielsweise eine gewölbte Darstellung der Wertzahl "10", die mit einer ersten Farbe, beispielsweise Rot, erscheint. Aus einer zweiten Betrachtungsrichtung zeigt das Sicherheitselement 12 ein zweites, sich scheinbar aus der Ebene der Banknote 10 herauswölbendes Motiv 14-B, beispielsweise eine gewölbte Darstellung eines Wappens, das mit einer zweiten Farbe, beispielsweise Blau, erscheint.

Bei Kippen 16 der Banknote 10 oder einer entsprechenden Änderung der Betrachtungsrichtung springt das Erscheinungsbild des Sicherheitselements 12 plötzlich von dem ersten zum zweiten Erscheinungsbild bzw. beim Zurückkippen vom zweiten zum ersten Erscheinungsbild. Die Änderung des Motivs und der Farbe erfolgt dabei gleichzeitig und ohne eine Zwischen- oder Übergangsstufe, in der beide Motive bzw. Farben gleichzeitig sichtbar wären oder ein Motiv in der Farbe des anderen Motivs sichtbar wäre. Das Erscheinungsbild springt daher übergangslos zwischen zwei Erscheinungsbildern 14-A, 14-B und wird daher als binärer Farb- und Effektwechsel bezeichnet.

Neben seinem attraktiven visuellen Erscheinungsbild und komplexen Aufbau, der als solcher bereits eine hohe Fälschungshürde darstellt, enthält das Sicherheitselement 12 ein maschinenlesbares Echtheitsmerkmal, das im Ausführungsbeispiel in den die unterschiedlichen Erscheinungsbilder erzeugenden Schichtaufbau integriert ist und das eine maschinell lesbare Codierung der Banknote 10, beispielsweise bezüglich der Währung, der Serie, der Denomination, und/oder der Charge erlaubt. Durch die Integration des maschinenlesbaren Echtheitsmerkmals in den visuellen Schichtaufbau werden Echtheitsmerkmale verschiedener Stufen untrennbar ineinander verwoben, wodurch eine besonders hohe Fälschungssicherheit entsteht. Ein potentieller Fälscher müsste nämlich nicht nur den visuellen Eindruck des Sicherheitselements nachstellen, sondern auch das Vorliegen und die Art der Codierung des maschinenlesbaren Merkmals erkennen und dieses zudem an der korrekten Stelle in den visuellen Schichtaufbau integrieren, ohne dabei jedoch das visuelle Erscheinungsbild zu kompromittieren.

Der besondere Aufbau des maschinenlesbaren Sicherheitselements der Fig. 1 wird nun mit Bezug auf die schematische Querschnittsdarstellung der Fig. 2 näher erläutert, die einen Ausschnitt des auf der Banknote 10 aufgebrachten Sicherheitselements 12 zeigt.

Die Beispiele der Figuren 2 bis 5 und 15 dienen dem besseren Verständnis verschiedener Aspekte der Erfindung, sind aber selbst nicht anspruchsgemäß.

Das Sicherheitselement 12 enthält einen flächigen Träger 18, der durch seine Flächenausdehnung eine x-y-Ebene und eine darauf senkrecht stehende z-Achse definiert. Auf dem Träger 18 ist ein mehrfarbiger reflektiver Flächenbereich aufgebaut, der zwei Reliefstrukturen 24, 34 enthält, die in z-Richtung in zwei bestimmten, unterschiedlichen Höhenstufen bezogen auf den flächigen Träger 18 angeordnet sind. Die Prägestrukturbereiche stellen im Ausführungsbeispiel jeweils Mikrospiegelprägungen bzw. Mikrospiegelanordnungen 24, 34 dar, welche jeweils aus einer Vielzahl von gegen die x-y-Ebene geneigten Mikrospiegeln gebildet sind. Die lokalen Neigungswinkel der Mikrospiegel sind dabei gerade so gewählt, dass die Reliefstruktur der Mikrospiegelanordnungen 24, 34 nach ihrer Beschichtung jeweils ein gewünschtes optisches Erscheinungsbild erzeugt. Die unterschiedlichen Höhenstufen der Mikrospiegelanordnungen sind durch die unterschiedlichen Höhen der Grundflächen der Mikrospiegelanordnungen 24, 34 über dem Träger 18 definiert.

Um einen visuellen Kontrast mit der gewünschten Farbwirkung zu erzeugen sind die Mikrospiegelanordnungen 24, 34 jeweils mit einer reflexionserhöhenden Beschichtung 26, 36 versehen, die bei der Betrachtung den unterschiedlichen Farbeindruck der Mikrospiegelanordnungen erzeugen. Beispielsweise ist die Mikrospiegelanordnung 24 im Ausführungsbeispiel mit einer reflexionserhöhenden Beschichtung 26 versehen, die durch eine mit einer Metallisierung hinterlegten roten lasierenden Farbe gebildet ist. Die Mikrospiegelanordnung 34 ist bereichsweise mit einer reflexionserhöhenden Beschichtung 36 versehen, die durch eine mit einer Metallisierung hinterlegten blauen lasierenden Farbe gebildet ist, welche zudem in Teilbereichen mit einem maschinenlesbaren Merkmalsstoff 62 versetzt ist.

Zur Ausbildung der Reliefstrukturen sind die Mikrospiegelanordnungen 24, 34 jeweils in eine transparente Prägelackschicht 22, 32 eingeprägt und nach dem Aufbringen und gegebenenfalls Strukturieren der jeweiligen Beschichtung 26, 36 mit einer transparenten Decklackschicht 28 bzw. 38 eingeebnet. Die Decklackschichten weisen im Wesentlichen denselben Brechungsindex wie die Prägelackschichten 22, 32 auf, so dass die Mikrospiegel in Bereichen ohne Farbbeschichtung aufgrund des fehlenden Brechungsindexunterschieds zwischen Prägelackschicht und Decklackschicht visuell nicht in Erscheinung treten.

Das Sicherheitselement 12 ist für eine Betrachtung in Reflexion, in der Darstellung der Fig. 2 also von oben ausgelegt, so dass die weiter vom Betrachter entfernte Mikrospiegelanordnung 24 als die tiefer liegende Mikrospiegelanordnung und die näher am Betrachter liegende Mikrospiegelanordnung 34 als die höher liegende Mikrospiegelanordnung bezeichnet wird.

Die beiden Mikrospiegelanordnungen 24, 34 sind im Ausführungsbeispiel im gesamten Flächenbereich des Sicherheitselements 12 übereinander angeordnet. Während die rote reflexionserhöhende Beschichtung 26 der tiefer liegenden Mikrospiegelanordnung 24 durchgehend ist, ist die blaue reflexionserhöhende Farbbeschichtung 36 der höher liegenden Mikrospiegelanordnung 34 in einem Merkmalsbereich des Sicherheitselements in Form eines regelmäßigen Rasters 50 aus Rasterelementen 52 und Rasterzwischenräumen 54 ausgebildet. Konkret bilden die Rasterelemente 52 und Rasterzwischenräume 54 im Ausführungsbeispiel ein Schachbrettmuster, bei dem jedes Feld, also jedes Rasterelement 52 und jeder Rasterzwischenraum 54, eine Abmessung von 100 µm x 100 µm aufweist. Da die Mikrospiegel in der Regel deutlich kleiner sind, beispielsweise eine Kantenlänge von nur 10 µm aufweisen, fällt das Raster 50 der reflexionserhöhenden Beschichtung 36, anders als in der vereinfachten schematischen Darstellung der Fig. 2, im Allgemeinen nicht mit dem Raster der Mikrospiegel der Mikrospiegelanordnung 34 zusammen.

Aus der Betrachtungsrichtung 40-A entfalten die Mikrospiegel der Mikrospiegelanordnung 34 in den Rasterzwischenräumen 54 aufgrund des fehlenden Brechungsindexunterschieds der Lackschichten 32, 38 keine optische Wirkung, so dass der Betrachter 40 dort auf die für die Betrachtungsrichtung 40-A im Wesentlichen im Glanzwinkel stehenden, rot beschichteten Mikrospiegel der Mikrospiegelanordnung 24 blickt. Im Bereich der Rasterelemente 52 sind die Mikrospiegel der Mikrospiegelanordnung 34 zwar grundsätzlich wahrnehmbar, ihre Ausrichtung ist allerdings weit vom Glanzwinkel entfernt und sie erscheinen daher aus der Betrachtungsrichtung 40-A unauffällig und tragen zum Bildeindruck praktisch nicht bei. Insgesamt zeigt sich dem Betrachter aus Betrachtungsrichtung 40-A somit im Wesentlichen das von der Mikrospiegelanordnung 24 erzeugte rote Erscheinungsbild 14-A der gewölbten Wertzahl "10".

Aus der Betrachtungsrichtung 40-B blickt der Betrachter im Bereich der Rasterelemente 52 auf die blau beschichteten Mikrospiegel der Mikrospiegelanordnung 34. Im Bereich der Rasterzwischenräume 54 kann der Betrachter zwar grundsätzlich die Mikrospiegel der tiefer liegenden Mikrospiegelanordnung 24 wahrnehmen, allerdings ist deren Ausrichtung aus Betrachtungsrichtung 40-B weit vom Glanzwinkel entfernt. Die Mikrospiegelanordnung 24 erscheint daher unauffällig und trägt zum Bildeindruck praktisch nicht bei. Insgesamt zeigt sich dem Betrachter aus Betrachtungsrichtung 40-B somit im Wesentlichen das von der Mikrospiegelanordnung 34 erzeugte blaue Erscheinungsbild 14-B des gewölbten Wappens.

Die höher liegende reflexionserhöhende Beschichtung 36 enthält in Teilbereichen 60 einen maschinenlesbaren Merkmalsstoff, beispielsweise einen visuell transparenten, IR-absorbierenden Merkmalsstoff 62, der den visuellen Farbeindruck der höher liegenden Mikrospiegelanordnung 24 nicht beeinträchtigt. Die Anordnung der Teilbereiche 60 mit IR-absorbierendem Merkmalsstoff und der Teilbereiche ohne IR-absorbierenden Merkmalsstoff bildet eine maschinenlesbare Codierung 64, die durch Beaufschlagung des Sicherheitselements mit IR-Strahlung und Messung der IR-Antwort, beispielsweise der bereichsweise unterschiedlichen IR-Reflexion ausgelesen werden kann. Die Codierung 64 kann beispielsweise die Denomination oder eine Seriennummer der Banknote 10 in kodierter Form darstellen.

Die Codierung kann nicht nur in einer Abfolge von Teilbereichen mit und ohne Merkmalsstoff bestehen, sondern kann auch komplexer ausgebildet sein. Beispielsweise können in dem maschinenlesbaren Echtheitsmerkmal unterschiedliche IR-absorbierende Merkmalsstoffe eingesetzt werden, die in verschiedenen IR-Wellenlängenbereichen absorbieren und die nebeneinander, übereinander, aneinander angrenzende oder überlappend in verschiedenen Teilbereichen der Beschichtung 36 vorgesehen sind. Auch die Verwendung IR-transparenter Merkmalstoffe ist möglich. Durch den Einsatz unterschiedlicher Merkmalsstoffe kann sowohl die Codedichte als auch die Fälschungssicherheit des Elements erhöht werden.

In anderen Gestaltungen kann die Codierung 64 als maschinenlesbare Merkmalsstoffe magnetische Stoffe enthalten, die beispielsweise in Form einer Pigmentfarbe aufgedruckt oder als magnetisches Metall aufgedampft sein können. Die verwendeten maschinenlesbaren Merkmalsstoffe können auch andere maschinenlesbare Eigenschaften aufweisen, wie etwa Lumineszenz, insbesondere Phosphoreszenz oder elektrische Leitfähigkeit, insbesondere organische transparente Leitfähigkeit.

Da die von dem Merkmalsstoff 62 gebildete Codierung 64 im Inneren des Sicherheitselements liegt, ist sie durch die angrenzenden Schichten vor mechanischen, physikalischen und chemischen Einflüssen geschützt und ist daher sehr umlaufbeständig. Die innenliegende Anordnung schützt das maschinenlesbare Merkmal 64 auch vor manipulativen Angriffen und führt so zu einer weiter erhöhten Fälschungshürde.

Das Ein- oder Aufbringen des maschinenlesbaren Merkmalsstoffs 62 kann auf unterschiedliche Weise erfolgen. Wenn die reflexionserhöhende Beschichtung wie im Ausführungsbeispiel eine lasierende Farbe auf einer Metallisierung darstellt, kann der maschinenlesbare Merkmalsstoff 62 beispielsweise in den Teilbereichen 60 der lasierenden Farbe beigemischt sein, er kann Teil der Metallisierung sein, beispielsweise indem in Teilbereichen 60 ein magnetisches Metall aufgebracht wird, oder der Merkmalsstoff kann in einer zusätzlichen Schicht vorliegen, die in den Teilbereichen 60 zusätzlich zur lasierenden Farbe und zur Metallisierung vorgesehen ist.

Die höher liegende reflexionserhöhende Beschichtung kann nicht nur als Raster mit kleinen Rasterelementen und Rasterzwischenräumen strukturiert sein, alternativ oder zusätzlich kann auch vorgesehen sein, dass die höher liegende reflexionserhöhende Beschichtung in Effektbereichen mit größeren Aussparungen (größer als 140 µm, insbesondere größer als 250 µm, 500 µm, oder sogar 1 mm) versehen ist und dort ein Erscheinungsbild zeigt, dass als Farbe-zu-Effekt-Passerung bezeichnet wird. Auch wenn die vorliegende Erfindung teilweise anhand von Ausführungsbeispielen mit binärem Farb- und Effektwechsel und teilweise anhand von Ausführungsbeispiel mit Farbe-zu-Effekt-Passerung illustriert wird, versteht sich, dass die jeweils beschriebene Kombination mit maschinenlesbaren Merkmalsstoffen auch bei Gestaltungen des jeweils anderen Erscheinungsbilds vorgenommen werden kann.

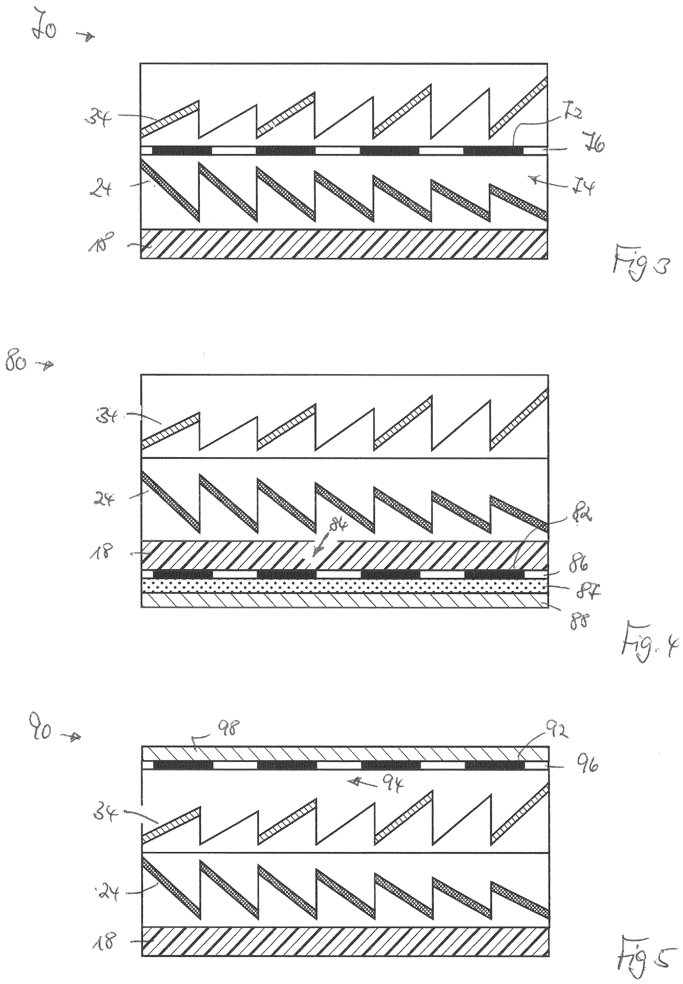

Das in Fig. 3 dargestellte maschinenlesbare Sicherheitselement 70 ist bezüglich der Ausbildung des optisch variablen Erscheinungsbilds wie das Sicherheitselement der Fig. 2 aufgebaut, unterschiedet sich aber in der Anordnung des maschinenlesbaren Echtheitsmerkmals. Bei dem Sicherheitselement 70 liegt das maschinenlesbare Echtheitsmerkmal in Form einer ebenen Schicht 76 vor, die zwischen der höher liegende Mikrospiegelanordnung 34 und der tiefer liegende Mikrospiegelanordnung 32 angeordnet ist. Im gezeigten Ausführungsbeispiel enthält die Schicht 76 Teilbereiche mit und Teilbereiche ohne maschinenlesbarem Merkmalsstoff 72 und bildet so eine maschinell auslesbare Codierung 74.

In anderen Ausgestaltungen ist die Schicht 76 vollflächig ausgebildet, so dass das maschinenlesbare Merkmal in dem Vorliegen bzw. den Eigenschaften der Schicht 76 selbst besteht. Als maschinenlesbare Merkmalsstoffe kommen wie bei Fig. 2 insbesondere IR-absorbierende, IR-transparente, magnetische, elektrisch leitfähige und/ oder lumineszierende, insbesondere phosphoreszierende Merkmalsstoffe in Frage. Die Schicht 76 kann visuell farblos transparent ausgebildet sein oder eine Farbwirkung aufweisen und eine zur Gesamtfarbwirkung des Sicherheitselements 70 betragende farbige Flachstruktur bilden. Die Codierung 74 ist im Inneren des Sicherheitselements 70 eingebettet und ist durch die angrenzenden Schichten vor mechanischen, physikalischen und chemischen Einflüssen und vor manipulativen Angriffen geschützt.

Die Figuren 4 und 5 zeigen zwei weitere Varianten, die in Abwandlung des Sicherheitselements 70 der Fig. 3 ein maschinenlesbares Echtheitsmerkmal in Form einer ebenen Schicht enthalten. Bei dem Sicherheitselement 80 der Fig. 4 ist auf der den Mikrospiegelanordnungen 24, 34 gegenüberliegenden Seite der Trägerfolie 18 eine ebene Schicht 86 mit Teilbereichen mit und mit Teilbereichen ohne maschinenlesbaren Merkmalsstoff 82 vorgesehen, die eine maschinell auslesbare Codierung 84 bildet. Die Schicht 86 ist von einer Reflektorschicht 87, beispielsweise aus Aluminium und einer weiteren Schicht 88 bedeckt, bei der es beispielsweise um eine Schutzlackschicht oder eine Haftvermittlerschicht handeln kann.

Bei dem Sicherheitselement 90 der Fig. 5 ist die ebene Schicht 96 mit der Codierung 94 aus Teilbereichen mit bzw. ohne maschinenlesbarem Merkmalsstoff 92 auf derselben Seite des Trägers 18 wie die Mikrospiegelanordnungen 24, 34 vorgesehen in Blickrichtung über diesen angeordnet. Die ebene Schicht 96 ist mit einer weiteren Schicht 98, beispielsweise einer Schutzlackschicht abgedeckt.

Auch bei den Ausgestaltungen der Figuren 4 und 5 können die Schichten 86 bzw. 96 auch vollflächig ausgebildet sein und sie können visuell farblos transparent sein oder zur Farbwirkung des Sicherheitselements 80 bzw. 90 betragen. Die Codierungen 84, 94 liegen ebenfalls im Inneren des jeweiligen Sicherheitselements und sind durch die angrenzenden Schichten vor mechanischen, physikalischen und chemischen Belastungen und vor manipulativen Angriffen geschützt.

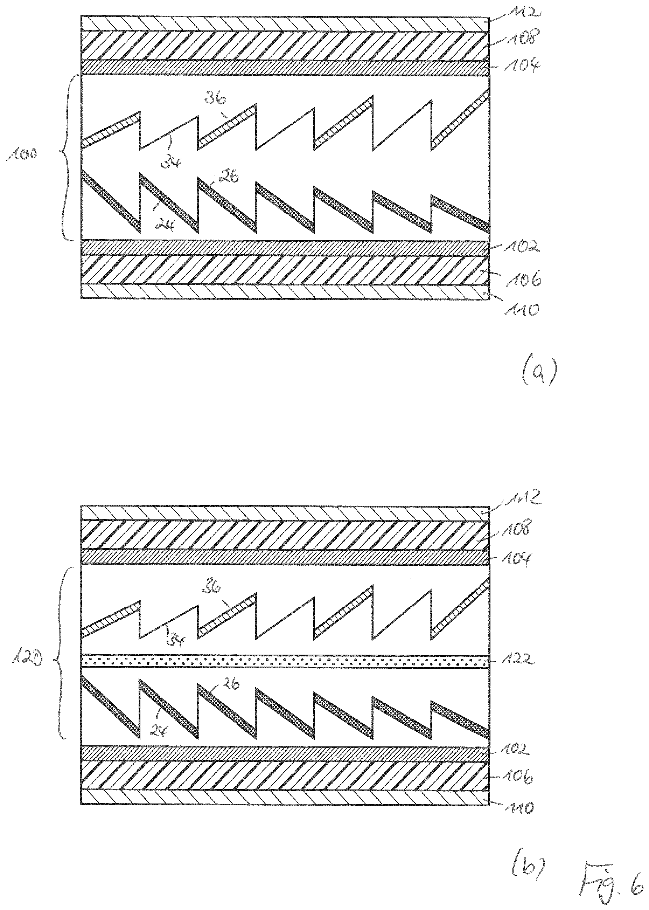

Figur 6 zeigt in (a) und (b) schematisch den grundsätzlichen Aufbau maschinenlesbarer optisch variabler Sicherheitselemente nach der vorliegenden Erfindung. In Fig. 6(a) bezeichnet das Bezugszeichen 100 dabei einen Einschicht-Effektaufbau, in dem die beiden Reliefstrukturen 24, 34 mit ihren reflexionserhöhenden Beschichtungen 26, 36 ohne Zwischenschicht übereinander liegen. In Fig. 6(b) enthält das Sicherheitselement einen Zweischicht-Effektaufbau 120, bei dem zwischen den Reliefstrukturen 24, 34 mit ihren jeweiligen reflexionserhöhenden Beschichtungen 26, 36 eine Zwischenschicht 122, beispielsweise eine lichtdurchlässige farbige Flachstruktur angeordnet ist.

In beiden Aufbauvarianten bezeichnet das Bezugszeichen 102 eine untere Schicht, 104 eine obere Schicht, 106 eine optionale untere Träger- oder Hilfsfolie, 108 eine optionale obere Träger- oder Hilfsfolie, 110 eine optionale untere äußere Schicht und 112 eine optionale obere äußere Schicht. Die unter Schicht, die obere Schicht, die untere äußere Schicht und die obere äußere Schicht können durch eine Schicht eines Schutzlacks, eines Haftvermittlers, eines Reflektors, eines Heißsiegelklebers gebildet sein oder aus einer Kombination der genannten Schichten bestehen.

Ein maschinenlesbarer Merkmalsstoff kann in der unteren Schicht 102, der oberen Schicht 104, in der unteren oder oberen Träger- oder Hilfsfolie 106, 108, in der Zwischenschicht 122, in einer der Prägelackschichten 22, 32 und/ oder in einer der reflexionserhöhenden Beschichtungen 26, 36 vorgesehen sein. Wie oben geschildert ist ein maschinenlesbare Merkmalsstoff mit Vorteil in den Einschicht-Effektaufbau 100 oder den Zweischicht-Effektaufbau 120 integriert und liegt mit besonderem Vorteil in der Zwischenschicht 122, in zumindest einer der Prägelackschichten 22, 32 und/oder zumindest einer der reflexionserhöhenden Beschichtungen 26, 36 vor.

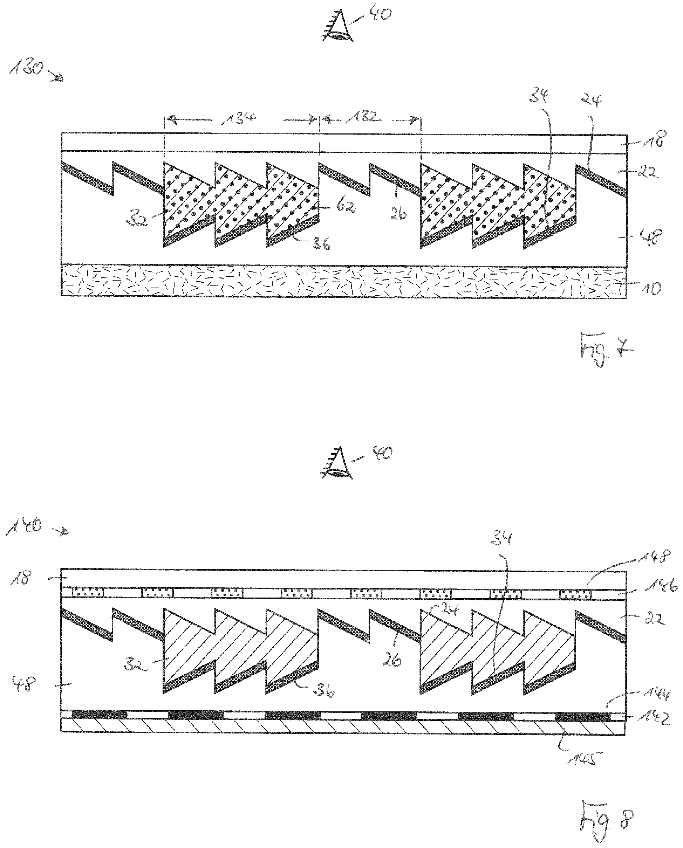

Mit Bezug auf die Figuren 7 bis 16 werden nun zur Illustration einige weitere konkrete Ausgestaltungen von Sicherheitselementen beschrieben. Die Ausgestaltung der Figuren 7 bis 14 und 16 sind dabei Ausführungsbeispiele der Erfindung.

Figur 7 zeigt schematisch einen Ausschnitt eines auf einer Banknote 10 aufgebrachten Sicherheitselements 130, bei dem der visuelle Kontrast der Mikrospiegelanordnungen 24, 34 durch ein Zusammenspiel unterschiedlicher Farbwirkungen der beteiligten Prägelackschichten mit der Farbwirkung einer einheitlichen reflexionserhöhenden Beschichtung entsteht.

Das Sicherheitselement 130 enthält einen flächigen, transparent farblosen Träger 18 mit einem mehrfarbigen reflektiven Flächenbereich, der einen Prägestrukturbereich mit Mikrospiegel-Prägungen 24, 34 in zwei unterschiedlichen Höhenstufen enthält.

Ein erster Prägebereich 24 ist durch Mikrospiegelprägungen gebildet, deren Grundflächen in einer ersten Höhe über dem Träger 18 liegen, während ein zweiter Prägebereich durch Mikrospiegelprägungen 34 gegeben ist, deren Grundflächen in einer zweiten, größeren Höhe über dem Träger 18 liegen. Wie durch die Position des Betrachters 40 angedeutet, ist das Sicherheitselement 130 auf Betrachtung von der Seite des Trägers 18 her ausgelegt, so dass die Mikrospiegelprägungen 34 die tiefer liegende Mikrospiegelanordnung und die Mikrospiegelprägungen 24 die höher liegende Mikrospiegelanordnung bilden.

Die Mikrospiegelprägungen bzw. Mikrospiegelanordnungen 24, 34 enthalten wie beim Ausführungsbeispiel der Fig. 2 jeweils eine Vielzahl von gegen die x-y-Ebene geneigten Mikrospiegeln, deren lokalen Neigungswinkel gerade so gewählt sind, dass die Reliefstrukturen der Mikrospiegelprägungen 24, 34 im Zusammenspiel mit den Farbwirkungen der Prägelackschichten 22, 32 und der Farbwirkung der einheitlich auf den Mikrospiegelprägungen aufgebrachten reflexionserhöhenden Beschichtung 26, 36 ein gewünschtes optisches Erscheinungsbild erzeugen.

Während die Prägelackschicht 22, in der die Mikrospiegelanordnung 24 geprägt ist, transparent farblos ist, ist die Prägelackschicht 32, in der die Mikrospiegelanordnung 34 geprägt ist, lasierend, beispielsweise lasierend blau eingefärbt. Die Mikrospiegelanordnung 24, 34 sind jeweils mit einer reflexionserhöhenden Beschichtung 26, 36 versehen, die im Ausführungsbeispiel durch eine im selben Arbeitsgang gleichzeitig aufgebrachte Metallisierung gebildet sind. Konkret sind die reflexionserhöhenden Beschichtungen 26, 36 beispielsweise durch eine dünne aufgedampfte Silberschicht mit einer silbrig metallischen Farbwirkung gebildet.

Der gewünschte visuelle Kontrast der Mikrospiegelanordnungen 24, 34 aus den verschiedenen Betrachtungspositionen des Betrachters 40 entsteht durch das Zusammenspiel der verschiedenen Farbwirkungen der Prägelackschichten 22, 32 mit der Farbwirkung der einheitlichen reflexionserhöhenden Beschichtung 26, 36. Während der Betrachter 40 im Teilbereich 134 durch die lasierende blaue Prägelackschicht 32 hindurch auf die Mikrospiegelanordnung 34 mit der Silberschicht 36 blickt, wird der visuelle Eindruck im Bereich 132 von der Mikrospiegelanordnung 24 und damit nur von der Farbwirkung der Silberschicht 26 alleine bestimmt.

Zur Erzeugung eines maschinenlesbaren Merkmals ist bei dem Ausführungsbeispiel der Fig. 7 die lasierend blaue Prägelackschicht 32 zudem vollständig oder bereichsweise mit einem maschinenlesbaren Merkmalsstoff, beispielsweise einem IR-absorbierenden Stoff 62 oder einem magnetischen Stoff versehen, dessen Anwesenheit maschinell ausgelesen werden kann.

Das Ausführungsbeispiel der Fig. 8 zeigt ein Sicherheitselement 140, das auf demselben Farbgebungsprinzip wie die Ausgestaltung der Fig. 7 beruht. Allerdings ist das maschinenlesbaren Merkmal bei dieser Ausgestaltung nicht in der Prägelackschicht 32, sondern in separaten ebenen Schichten 142, 146 ausgebildet. Eine erste maschinenlesbare Schicht 142 ist über eine Lackbeschichtung 48 in Blickrichtung unterhalb der beiden Mikrospiegelanordnungen 24, 34 angeordnet und weist Teilbereiche mit und Teilbereiche ohne magnetischen Merkmalstoff 144 auf, um eine magnetische Codierung in dem Sicherheitselement 140 zu bilden. Die maschinenlesbare Schicht 142 ist von zumindest einer weiteren Schicht 145, beispielsweise einer Reflektorschicht und/oder einer Schutzschicht abgedeckt.

Eine zweite maschinenlesbare Schicht 146 ist zwischen dem Träger 18 und der höher liegenden Prägelackschicht 22 in Blickrichtung oberhalb der beiden Mikrospiegelanordnungen 24, 34 angeordnet. Die zweite maschinenlesbare Schicht 146 weist Teilbereiche mit einem IR-absorbierenden, visuell transparenten Merkmalstoff 148 auf und Teilbereiche ohne einen solchen Merkmalsstoff, und bildet dadurch eine zweite maschinenlesbare Codierung in dem Sicherheitselement 140. Die zweite maschinenlesbare Schicht 146 kann auch auf der den Mikrospiegelanordnungen abgewandten Seite des Trägers 18 vorgesehen sein und ist in diesem Fall von einer weiteren Schicht, beispielsweise einer transparenten Schutzlackschicht abgedeckt. Es versteht sich, dass auch nur eine der beiden maschinenlesbaren Schichten 142, 146 in dem Sicherheitselement 140 vorgesehen sein kann.

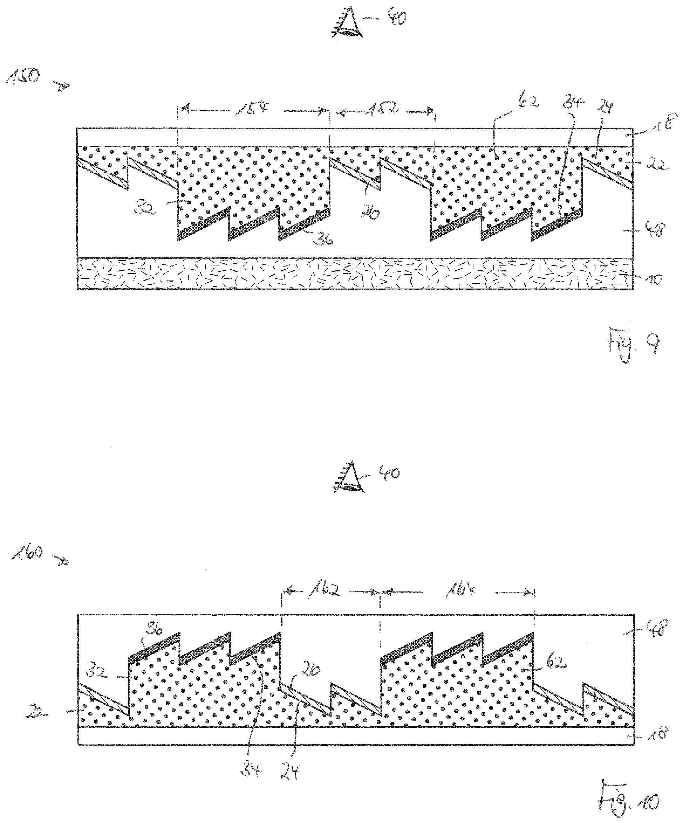

Das weitere Ausführungsbeispiel der Fig. 9 zeigt ein schematisch einen Ausschnitt eines auf einer Banknote 10 aufgebrachten Sicherheitselements 150. Auf einer transparenten PET-Trägerfolie 18 ist eine Prägelackschicht 22, 32 aufgebracht, die Mikrospiegelprägungen 24, 34 auf zwei unterschiedlichen Höhen stufen enthält. Der Prägelack ist im sichtbaren Spektralbereich farblos transparent und mit einem IR-absorbierenden Merkmalsstoff 62 versehen. Das gewünschte, visuell unterschiedliche Erscheinungsbild der Bereiche 152, 154 mit den unterschiedlich hohen Mikrospiegelanordnungen wird durch unterschiedliche Farbbeschichtungen 26, 36 der Mikrospiegelanordnungen erreicht. Da die Prägelackschicht 22, 32 im Teilbereich 154 eine größere Schichtdicke aufweist als die Prägelackschicht 22 im Teilbereich 152 alleine, entsteht zudem eine durch die Form der Bereiche 152, 154 modulierte IR-Absorption, die ein maschinenlesbares Echtheitsmerkmal bildet. Wie durch die Position des Betrachters 40 angedeutet, ist das Sicherheitselement 150 auf Betrachtung von Seite des Trägers 18 und durch die Prägelackschichten 22, 32 hindurch ausgelegt.

Das Sicherheitselement 160 der Fig. 10 weist einen ähnlichen Aufbau auf, enthält allerdings als maschinenlesbaren Merkmalsstoff in den Prägelackschichten 22, 32, einen magnetischen Merkmalsstoff 62. Das Sicherheitselement 160 ist auf Betrachtung von der den Prägelackschichten 22, 32 abgewandten Seite und durch eine transparente Lackschicht 48 hindurch ausgelegt, so dass eine eventuelle dunkle Färbung des magnetischen Merkmalsstoff 62 beim visuellen Erscheinungsbild des Sicherheitselements nicht in Erscheinung tritt. Das unterschiedliche Erscheinungsbild der Bereiche 162, 164 wird auch hier durch unterschiedliche Farbbeschichtungen 26, 36 der Mikrospiegelanordnungen 24, 34 erreicht. Da die kombinierten Prägelackschichten 22, 32 im Teilbereich 164 eine größere Schichtdicke aufweisen als die Prägelackschicht 22 des Teilbereichs 162 alleine, entsteht beim maschinellen Auslesen ein durch die Form und Anordnung der Teilbereiche 162, 164 moduliertes Magnetsignal, das ein maschinenlesbares Echtheitsmerkmal darstellt.

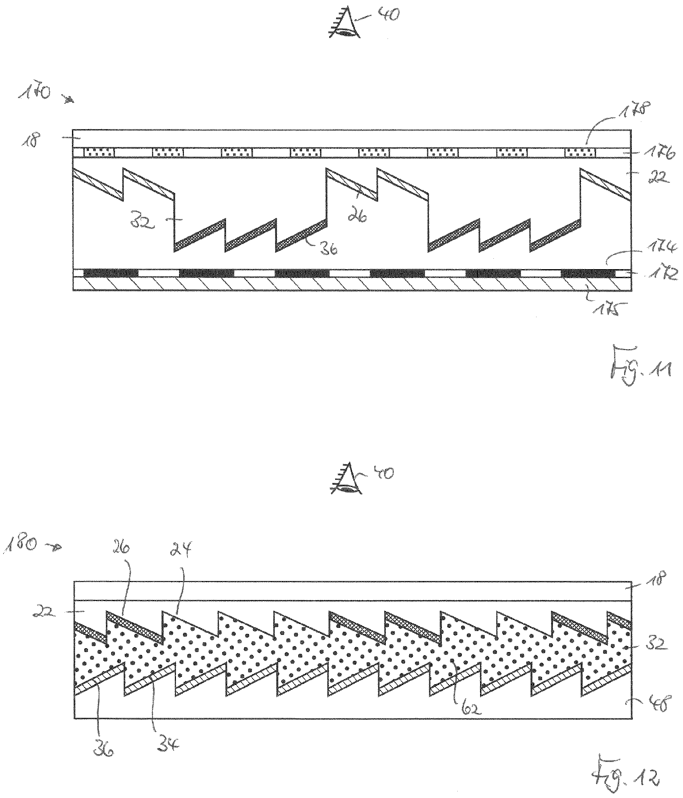

Das Ausführungsbeispiel der Fig. 11 zeigt ein Sicherheitselement 170, das auf demselben Farbgebungsprinzip wie die Ausgestaltung der Fig. 9 beruht, und bei dem insbesondere die Prägelackschichten 22 und 32 der beiden Mikrospiegelanordnungen 24, 34 durch denselben Prägelack gebildet sind und ein visuell unterschiedliches Erscheinungsbild durch unterschiedliche Farbbeschichtungen 26, 36 der Mikrospiegelanordnungen erreicht wird.

Allerdings sind maschinenlesbaren Merkmale bei dieser Ausgestaltung nicht in einer der Prägelackschichten 22, 32, sondern in separaten ebenen Schichten 172, 176 ausgebildet. Eine erste maschinenlesbare Schicht 172 ist über einer Lackbeschichtung 48 in Blickrichtung unterhalb der beiden Mikrospiegelanordnungen 24, 34 angeordnet und weist Teilbereiche mit und Teilbereiche ohne magnetischen Merkmalstoff 174 auf, um eine magnetische Codierung in dem Sicherheitselement 170 zu bilden. Die maschinenlesbare Schicht 172 ist von zumindest einer weiteren Schicht 175, beispielsweise einer Reflektorschicht und/ oder einer Schutzschicht abgedeckt.

Eine zweite maschinenlesbare Schicht 176 ist zwischen dem Träger 18 und der Prägelackschicht 22 in Blickrichtung oberhalb der beiden Mikrospiegelanordnungen 24, 34 angeordnet. Die maschinenlesbare Schicht 176 weist Teilbereiche mit und Teilbereiche ohne IR-absorbierenden, visuell transparenten Merkmalstoff 178 auf, um eine zweite maschinenlesbare Codierung in dem Sicherheitselement 170 zu bilden. Die zweite maschinenlesbare Schicht 176 kann auch auf der gegenüberliegenden Seite des Trägers 18 vorgesehen sein und ist in diesem Fall von einer weiteren Schicht, beispielsweise einer Schutzschicht abgedeckt. Es versteht sich, dass auch nur eine der beiden maschinenlesbaren Schichten in dem Sicherheitselement 170 vorgesehen sein kann.

Eine weitere Gestaltung ist in Fig. 12 illustriert. Bei dem Sicherheitselement 180 wurde auf einer transparenten PET-Trägerfolie 18 eine erste Prägelackschicht 22 aufgebracht, mit einer ersten, höher liegenden Mikrospiegelprägung 24 versehen und zur Farbgebung bereichsweise mit einer ersten Metallisierung 26 ausgestattet. Auf diese Anordnung wurde vollflächig eine zweite Prägelackschicht 32 aufgebracht, die im sichtbaren Spektralbereich farblos transparent und mit einem IR-absorbierenden Merkmalsstoff 62 versehen ist. Die zweite Prägelackschicht 32 ist mit einer zweiten Mikrospiegelprägung 34 versehen, die die tiefer liegende Mikrospiegelanordnung bildet, zur Farbgebung vollflächig mit einer zweiten Metallisierung 36 versehen und mit einer Lackschicht 48 eingeebnet. Wie durch die Position des Betrachters 40 angedeutet, ist das Sicherheitselement 170 auf Betrachtung durch den Träger hindurch ausgelegt.

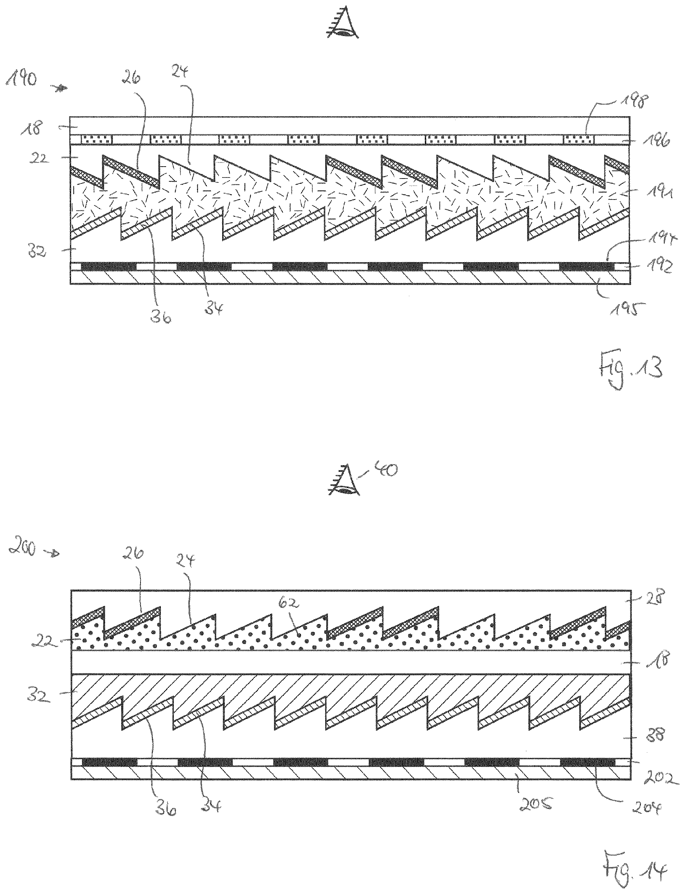

Das weitere Ausführungsbeispiel der Fig. 13 zeigt ein Sicherheitselement 190 mit einer PET-Trägerfolie 18, auf die eine maschinenlesbare Schicht 196 mit Teilbereichen mit und mit Teilbereichen ohne IR-absorbierendem, visuell transparentem Merkmalstoff 198 aufgebracht ist. Auf der maschinenlesbaren Schicht 196 ist eine erste Prägelackschicht 22 mit einer ersten Mikrospiegelprägung 24 und einer bereichsweise vorliegenden ersten Metallisierung 26 angeordnet. Weiter enthält das Sicherheitselement 190 eine Schichtfolge aus einer zweiten Prägelackschicht 32 mit einer zweiten Mikrospiegelprägung 34 und einer vollflächigen zweiten Metallisierung 36, die zunächst auf einer Hilfsträgerfolie aufgebaut und dann über eine farbige Kaschierkleberschicht 191 auf die erstgenannte Schichtenfolge aufkaschiert wurde.

Danach wurde die Hilfsträgerfolie abgezogen und die freigelegte zweite Prägelackschicht mit einer weiteren maschinenlesbare Schicht 192 versehen, die Teilbereiche mit und Teilbereiche ohne magnetischen Merkmalstoff 194 aufweist, um neben der IR-Codierung der Schicht 196 auch eine magnetische Codierung in dem Sicherheitselement 190 zu schaffen. Die maschinenlesbare Schicht 192 ist von zumindest einer weiteren Schicht 195, beispielsweise einer Reflektorschicht und/oder einer Schutzschicht abgedeckt. Es versteht sich, dass auch nur eine der beiden maschinenlesbaren Schichten in dem Sicherheitselement 190 vorgesehen sein kann.

Bei dem Ausführungsbeispiel der Fig. 14 sind die beiden Mikrospiegelanordnungen 24, 34 des Sicherheitselements 200 auf unterschiedlichen Seiten einer transparenten PET-Trägerfolie 18 angeordnet. Die auf der Oberseite des Trägers 18 vorgesehene erste Anordnung umfasst eine erste Prägelackschicht 22, die im sichtbaren Spektralbereich farblos transparent und mit IR-absorbierendem Merkmalsstoff 62 versehen ist. In die erste Prägelackschicht 22 ist eine erste Mikrospiegelanordnung 24 eingeprägt, diese zur Farbgebung bereichsweise mit einer ersten Metallisierung 26 versehen dann mit einer transparenten Deckschicht 28 eingeebnet.

Auf der gegenüberliegenden Unterseite des Trägers 18 ist eine zweite Anordnung vorgesehen, die eine zweite, im sichtbaren Spektralbereich lichtdurchlässig eingefärbte Prägelackschicht 32 umfasst, die mit einer zweiten Mikrospiegelprägung 34 versehen und zur weiteren Farbgebung vollflächige mit einer zweiten Metallisierung 36 ausgestattet ist. Die zweite Anordnung ist mit einer Primer- oder Schutzlackschicht 38 eingeebnet, auf welcher eine maschinenlesbare Schicht 202 angeordnet ist, die Teilbereiche mit und Teilbereiche ohne magnetischen Merkmalstoff 204 aufweist. Auf diese Weise wird neben der maschinenlesbaren IR-Codierung der Prägelackschicht 22 auch eine maschinenlesbare magnetische Codierung in dem Sicherheitselement 200 gebildet. Wie durch die Position des Betrachters 40 angedeutet, ist das Sicherheitselement 200 auf Betrachtung von der Oberseite des Trägers 18 her ausgelegt. Es versteht sich, dass auch nur eine der beiden maschinenlesbaren Schichten in dem Sicherheitselement 200 vorgesehen sein kann.

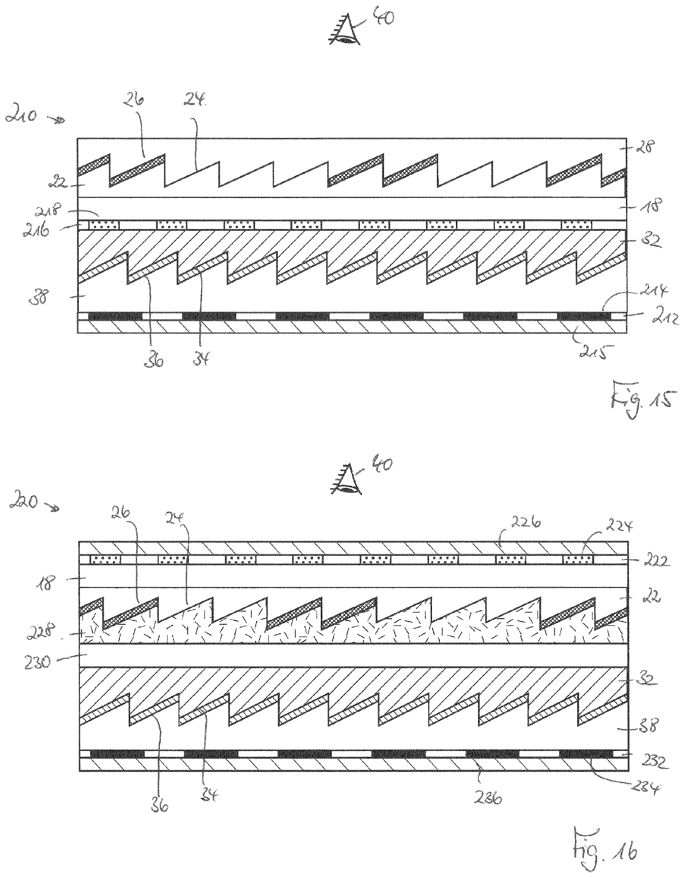

Auch bei dem Sicherheitselement 210 der Fig. 15 sind zwei Mikrospiegelanordnungen 24, 34 auf unterschiedlichen Seiten einer transparenten PET-Trägerfolie 18 angeordnet. Die auf der Oberseite des Trägers 18 vorgesehene erste Anordnung umfasst dabei eine erste Prägelackschicht 22, die farblos oder eingefärbt sein kann, eine erste Mikrospiegelprägung 24, eine bereichsweise vorgesehene Metallisierung 26 und eine einebnende Decklackschicht 28.

Auf der gegenüberliegenden Unterseite des Trägers 18 ist eine erste maschinenlesbare Schicht 216 mit Teilbereichen mit und Teilbereichen ohne IR-absorbierenden, visuell transparenten Merkmalstoff 218 aufgebracht. Auf dieser maschinenlesbaren Schicht 216 ist eine zweite Anordnung vorgesehen, die eine im sichtbaren Spektralbereich lichtdurchlässig eingefärbte Prägelackschicht 32 umfasst, die mit einer zweiten Mikrospiegelprägung 34 versehen, zur weiteren Farbgebung vollflächig mit einer zweiten Metallisierung 36 ausgestattet und schließlich mit einer Primer- oder Schutzlackschicht 38 eingeebnet ist. Auf dieser Schutzlackschicht 38 ist eine zweite maschinenlesbare Schicht 212 angeordnet, die Teilbereiche mit und Teilbereiche ohne magnetischen Merkmalstoff 214 aufweist und die von zumindest einer weiteren Schicht 215, beispielsweise einer Reflektorschicht und/oder einer Schutzschicht abgedeckt ist. Neben der IR-Codierung der Schicht 216 wird so auch eine magnetische Codierung in dem Sicherheitselement 210 gebildet.

Es versteht sich, dass auch nur eine der beiden maschinenlesbaren Schichten in dem Sicherheitselement 210 vorgesehen sein kann. Wie durch die Position des Betrachters 40 angedeutet, ist das Sicherheitselement 210 auf Betrachtung von der Oberseite des Trägers 18 her ausgelegt.

Figur 16 zeigt eine weitere Variante eines erfindungsgemäßen Sicherheitselements 220. Auf der Oberseite einer ersten transparenten PET-Trägerfolie 18 ist dabei eine maschinenlesbare Schicht 222 mit Teilbereichen mit und Teilbereichen ohne IR-absorbierendem, visuell transparentem Merkmalstoff 224 ausgebildet, und mit einer Schutzlackschicht 226 abgedeckt. Auf der Unterseite der ersten Trägerfolie 18 ist eine erste Anordnung aufgebaut, die eine erste, farbige oder farblose Prägelackschicht 22, eine erste Mikrospiegelprägung 24 und eine bereichsweise vorgesehene erste Metallisierung 26 aufweist.

Auf der Unterseite einer zweiten transparenten PET-Trägerfolie 230 ist eine zweite Anordnung aufgebaut, die eine zweite, farbige oder farblose Prägelackschicht 32, eine zweite Mikrospiegelprägung 34 und eine vollflächig vorliegende zweite Metallisierung 36 aufweist, und die mit einer Primer- oder Schutzlackschicht 38 eingeebnet ist. Auf dieser Schutzlackschicht 38 ist eine maschinenlesbare Schicht 232 angeordnet, die Teilbereiche mit und Teilbereiche ohne magnetischen Merkmalstoff 234 aufweist, und die von zumindest einer weiteren Schicht 236, beispielsweise einer Reflektorschicht und/oder einer Schutzschicht abgedeckt ist.

Die zweite transparente PET-Trägerfolie 230 ist mit ihrer Oberseite über einen farbigen Kaschierkleber 228 auf die erste Anordnung 22, 24, 26 der ersten Trägerfolie 18 aufkaschiert, so dass die in Fig. 16 gezeigte Gesamtstruktur entsteht. Wie durch die Position des Betrachters 40 angedeutet, ist das Sicherheitselement 220 auf Betrachtung von der Oberseite der ersten Trägerfolie 18 her ausgelegt.

### Bezugszeichenliste

- 10: Banknote
- 12: Sicherheitselement
- 14-A, 14-B: herauswölbende Motive
- 16: Kipprichtung
- 18: Träger
- 20: reflektiver Flächenbereich
- 22: Prägelackschicht
- 24: Mikrospiegelanordnung
- 26: reflexionserhöhende Beschichtung
- 28: Decklackschicht
- 32: Prägelackschicht
- 34: Mikrospiegelanordnung
- 36: reflexionserhöhende Beschichtung
- 38: Decklackschicht
- 40: Betrachter
- 40-A, 40-B: Betrachtungsrichtungen
- 50: Raster
- 52: Rasterelemente
- 54: Rasterzwischenräume
- 60: Teilbereiche
- 62: maschinenlesbarer Merkmalsstoff
- 70: Sicherheitselement
- 72: maschinenlesbarer Merkmalsstoff
- 74: Codierung
- 76: ebene Schicht
- 80: Sicherheitselement
- 82: maschinenlesbarer Merkmalsstoff
- 84: Codierung
- 86: ebene Schicht
- 87: Reflektorschicht
- 88: weitere Schicht
- 90: Sicherheitselement
- 92: maschinenlesbarer Merkmalsstoff
- 94: Codierung
- 96: ebene Schicht
- 98: weitere Schicht
- 100: Einschicht-Effektaufbau
- 102: untere Schicht
- 104: obere Schicht
- 106: optionale untere Träger- oder Hilfsfolie
- 108: optionale obere Träger- oder Hilfsfolie
- 110: optionale untere äußere Schicht
- 112: optionale obere äußere Schicht
- 120: Zweischicht-Effektaufbau
- 122: Zwischenschicht
- 130: Sicherheitselements
- 132, 134: Teilbereiche
- 140: Sicherheitselement
- 142: erste maschinenlesbare Schicht
- 144: magnetischer Merkmalstoff
- 145: weitere Schicht
- 146: zweite maschinenlesbare Schicht
- 148: IR-absorbierender, visuell transparenter Merkmalstoff
- 150: Sicherheitselement
- 152, 154: Teilbereiche
- 160: Sicherheitselement
- 162, 164: Teilbereiche
- 170: Sicherheitselement
- 172: erste maschinenlesbare Schicht
- 174: magnetischer Merkmalstoff
- 175: weitere Schicht
- 176: zweite maschinenlesbare Schicht
- 178: IR-absorbierender, visuell transparenter Merkmalstoff
- 180: Sicherheitselement
- 190: Sicherheitselement
- 191: farbige Kaschierkleberschicht
- 192: maschinenlesbare Schicht
- 194: magnetischer Merkmalstoff
- 195: weitere Schicht
- 196: maschinenlesbare Schicht
- 198: IR-absorbierender, visuell transparenter Merkmalstoff
- 200: Sicherheitselement
- 202: maschinenlesbare Schicht
- 204: magnetischer Merkmalstoff
- 205: weitere Schicht
- 210: Sicherheitselement
- 212: zweite maschinenlesbare Schicht
- 214: magnetischer Merkmalstoff
- 215: weitere Schicht
- 216: erste maschinenlesbare Schicht
- 218: IR-absorbierender, visuell transparenter Merkmalstoff
- 220: Sicherheitselement
- 222: maschinenlesbare Schicht
- 224: IR-absorbierender, visuell transparenter Merkmalstoff
- 226: Schutzlackschicht
- 230: zweiten transparenten PET-Trägerfolie
- 232: maschinenlesbare Schicht
- 234: magnetischer Merkmalstoff
- 236: weitere Schicht

## Patentansprüche

1. Optisch variables Sicherheitselement zur Absicherung von Wertgegenständen, dessen Flächenausdehnung eine darauf senkrecht stehende z-Achse definiert, mit einem reflektiven Flächenbereich, der zumindest zwei, aus unterschiedlichen Betrachtungsrichtungen erkennbare Erscheinungsbilder zeigt, wobei
- der reflektive Flächenbereich zwei Reliefstrukturen enthält, die in z-Richtung in unterschiedlichen Höhenstufen angeordnet sind und eine tiefer liegende und eine höher liegende Reliefstruktur bilden, die jeweils mit einer dem Reliefverlauf folgenden reflexionserhöhenden Beschichtung versehen sind,
- die höher liegende Reliefstruktur einen ersten optisch variablen Effekt in einer ersten Farbe zeigt,
- die tiefer liegende Reliefstruktur durch die höher liegende reflexionserhöhende Beschichtung selbst hindurch, oder durch Rasterzwischenräume oder Aussparungen in der höher liegenden reflexionserhöhende Beschichtung hindurch sichtbar ist und einen zweiten optisch variablen Effekt in einer zweiten, unterschiedlichen Farbe zeigt, und
- das Sicherheitselement in einer innenliegenden, vollflächig oder bereichsweise vorgesehenen Schicht mit zumindest einem maschinenlesbaren Merkmalsstoff versehen ist,
**dadurch gekennzeichnet, dass**
- das Sicherheitselement ein Echtheitsmerkmal mit zwei unterschiedlichen maschinenlesbaren Merkmalsstoffen enthält, die in separaten ebenen Schichten des Sicherheitselements vorliegen,
- wobei eine erste Schicht mit einem ersten der beiden maschinenlesbaren Merkmalsstoffe unterhalb der beiden Reliefstrukturen und eine zweite Schicht mit einem zweiten der beiden maschinenlesbaren Merkmalsstoffe oberhalb der beiden Reliefstrukturen angeordnet ist.

2. Sicherheitselement nach Anspruch 1, **dadurch gekennzeichnet, dass** zumindest ein maschinenlesbarer Merkmalsstoff in den die unterschiedlichen Erscheinungsbilder erzeugenden Schichtaufbau integriert ist.

3. Sicherheitselement nach wenigstens einem der Ansprüche 1 bis 2, **dadurch gekennzeichnet, dass** die höher liegende und/oder die tiefer liegende reflexionserhöhende Beschichtung vollflächig oder bereichsweise zumindest einen maschinenlesbaren Merkmalsstoff enthalten.

4. Sicherheitselement nach wenigstens einem der Ansprüche 1 bis 3, **dadurch gekennzeichnet, dass** die höher liegende Reliefstruktur durch eine Prägelackschicht gebildet ist, deren Prägelack vorzugsweise zumindest einen maschinenlesbaren Merkmalsstoff enthält und/ oder dass die tiefer liegende Reliefstruktur durch eine Prägelackschicht gebildet ist, deren Prägelack vorzugsweise zumindest einen maschinenlesbaren Merkmalsstoff enthält.

5. Sicherheitselement nach wenigstens einem der Ansprüche 1 bis 4, **dadurch gekennzeichnet, dass** die zwei unterschiedlichen maschinenlesbaren Merkmalsstoffen des Echtheitsmerkmals zwei IR-absorbierende Merkmalsstoffe sind, die in verschiedenen IR-Wellenlängenbereichen absorbieren, zwei magnetische Merkmalsstoffe mit unterschiedlichen magnetischen Eigenschaften, insbesondere unterschiedlicher Koerzitivität, sind, oder zwei lumineszierende Merkmalsstoffe sind, die mit unterschiedlichem Emissionsspektrum lumineszieren, oder bei unterschiedlichen Wellenlängen anregbar sind.

6. Optisch variables Sicherheitselement zur Absicherung von Wertgegenständen, dessen Flächenausdehnung eine darauf senkrecht stehende z-Achse definiert, mit einem reflektiven Flächenbereich, der zumindest zwei, aus unterschiedlichen Betrachtungsrichtungen erkennbare Erscheinungsbilder zeigt, wobei
- der reflektive Flächenbereich zwei Reliefstrukturen enthält, die in z-Richtung in unterschiedlichen Höhenstufen angeordnet sind und eine tiefer liegende und eine höher liegende Reliefstruktur bilden, die jeweils mit einer dem Reliefverlauf folgenden reflexionserhöhenden Beschichtung versehen sind,
- die höher liegende Reliefstruktur einen ersten optisch variablen Effekt in einer ersten Farbe zeigt,
- die tiefer liegende Reliefstruktur durch die höher liegende reflexionserhöhende Beschichtung selbst hindurch, oder durch Rasterzwischenräume oder Aussparungen in der höher liegenden reflexionserhöhende Beschichtung hindurch sichtbar ist und einen zweiten optisch variablen Effekt in einer zweiten, unterschiedlichen Farbe zeigt, und
- das Sicherheitselement in einer innenliegenden, vollflächig oder bereichsweise vorgesehenen Schicht mit zumindest einem maschinenlesbaren Merkmalsstoff versehen ist,
**dadurch gekennzeichnet, dass**
- die höher liegende Reliefstruktur durch eine Prägelackschicht gebildet ist, deren Prägelack zumindest einen maschinenlesbaren Merkmalsstoff enthält und/oder dass die tiefer liegende Reliefstruktur durch eine Prägelackschicht gebildet ist, deren Prägelack zumindest einen maschinenlesbaren Merkmalsstoff enthält.

7. Sicherheitselement nach wenigstens einem der Ansprüche 1 bis 6, **dadurch gekennzeichnet, dass** der zumindest eine maschinenlesbare Merkmalsstoff eine Codierung bildet, die insbesondere eine Währung, eine Serie, eine Denomination, und/oder eine Charge des Sicherheitselements angibt.

8. Sicherheitselement nach wenigstens einem der Ansprüche 1 bis 7, **dadurch gekennzeichnet, dass** die maschinenlesbaren Merkmalsstoffe IR-absorbierende, IR-transparente, magnetische, elektrisch leitfähige und/oder lumineszierende, insbesondere phosphoreszierende Merkmalsstoffe umfassen.

9. Sicherheitselement nach wenigstens einem der Ansprüche 1 bis 8, **dadurch gekennzeichnet, dass** zumindest ein maschinenlesbarer Merkmalsstoff in einer Druckfarbe, insbesondere einer Pigmentdruckfarbe vorliegt.

10. Sicherheitselement nach wenigstens einem der Ansprüche 1 bis 9, **dadurch gekennzeichnet, dass** zumindest ein maschinenlesbarer Merkmalsstoff in einer Aufdampffschicht vorliegt.

11. Sicherheitselement nach wenigstens einem der Ansprüche 1 bis 10, **dadurch gekennzeichnet, dass** die höher liegende Reliefstruktur und/ oder die tiefer liegende Reliefstruktur durch Mikrospiegelanordnungen mit gerichtet reflektierenden Mikrospiegeln gebildet sind, insbesondere mit nichtdiffraktiv wirkenden Spiegeln, und vorzugsweise mit planen Spiegeln, Hohlspiegeln und/ oder fresnelartigen Spiegeln.

12. Sicherheitselement nach wenigstens einem der Ansprüche 1 bis 11, **dadurch gekennzeichnet, dass** die höher liegende Reliefstruktur einen ersten optisch variablen Effekt in einer ersten Farbe zeigt, und die tiefer liegende Reliefstruktur in den Freibereichen des Flächenbereichs einen zweiten optisch variablen Effekt in einer zweiten, unterschiedlichen Farbe zeigt.

13. Sicherheitselement nach wenigstens einem der Ansprüche 1 bis 12, **dadurch gekennzeichnet, dass** zumindest eine der reflexionserhöhenden Schichten durch eine reflektierende Farbbeschichtung gebildet ist, insbesondere durch eine Metallisierung, einen Dünnschichtaufbau, durch eine mit einer Metallisierung hinterlegte lasierende Farbe, durch eine Lumineszenzfarbe mit einer metallischen Verspiegelung, durch eine Strukturfarbe und/oder durch eine Nanopartikelfarbe.

14. Sicherheitselement nach wenigstens einem der Ansprüche 1 bis 13, **dadurch gekennzeichnet, dass** die höher liegende reflexionserhöhende Beschichtung zumindest in einem Teilbereich des Flächenbereichs als regelmäßiges oder unregelmäßiges Raster mit Rasterelementen und Rasterzwischenräumen ausgebildet ist, wobei die Abmessungen der Rasterelemente und Rasterzwischenräume in einer oder beiden lateralen Richtungen unterhalb von 140 µm, vorzugsweise zwischen 20 µm und 100 µm, insbesondere zwischen 20 µm und 60 µm liegen.

15. Sicherheitselement nach wenigstens einem der Ansprüche 1 bis 14, **dadurch gekennzeichnet, dass** die höher liegende reflexionserhöhende Beschichtung zumindest in einem Teilbereich des Flächenbereichs als Effektbereich ausgebildet ist, in dem die Lackbereiche und/oder die Freibereiche laterale Abmessungen von mehr als 140 µm aufweisen, vorzugsweise von mehr als 250 µm, weiter vorzugsweise von mehr als 500 µm und insbesondere von mehr als 1 mm.

16. Sicherheitselement nach wenigstens einem der Ansprüche 1 bis 15, **dadurch gekennzeichnet, dass** in dem Sicherheitselement durch Aussparungen in der tiefer liegenden reflexionserhöhenden Beschichtung Negativkennzeichen ausgebildet sind.

17. Datenträger mit einem optisch variablen Sicherheitselement nach wenigstens einem der Ansprüche 1 bis 16.

## Claims

1. An optically variable security element for securing valuable articles, whose areal expanse defines a z-axis perpendicular thereto, having a reflective areal region that displays at least two appearances that are perceptible from different viewing directions,
- the reflective areal region including two relief structures that are arranged at different height levels in the z-direction and form a lower-lying and a higher-lying relief structure, each of which is furnished with a reflection-increasing coating that follows the relief profile,
- the higher-lying relief structure displaying a first optically variable effect in a first color,
- the lower-lying relief structure being visible through the higher-lying reflection-increasing coating itself, or through grid spaces or gaps in the higher-lying reflection-increasing coating, and displaying a second optically variable effect in a second, different color, and
- the security element being furnished, in an interior layer that is provided contiguously or in some regions, with at least one machine-readable feature substance,
**characterized in that**
- the security element includes an authenticating feature having two different machine-readable feature substances that are present in separate planar layers of the security element,
- a first layer having a first of the two machine-readable feature substances being arranged below the two relief structures and a second layer having a second of the two machine-readable feature substances being arranged above the two relief structures.

2. The security element according to claim 1, **characterized in that** at least one machine-readable feature substance is integrated in the layer structure that produces the different appearances.

3. The security element according to at least one of claims 1 to 2, **characterized in that** the higher-lying and/or the lower-lying reflection-increasing coating include, contiguously or in some regions, at least one machine-readable feature substance.

4. The security element according to at least one of claims 1 to 3, **characterized in that** the higher-lying relief structure is formed by an embossing lacquer layer whose embossing lacquer preferably includes at least one machine-readable feature substance and/or **in that** the lower-lying relief structure is formed by an embossing lacquer layer whose embossing lacquer preferably includes at least one machine-readable feature substance.

5. The security element according to at least one of claims 1 to 4, **characterized in that** the two different machine-readable feature substances of the authenticating feature are two IR-absorbing feature substances that absorb in different IR wavelength regions, are two magnetic feature substances having different magnetic properties, especially different coercivities, or are two luminescent feature substances that luminesce with different emission spectra, or are excitable at different wavelengths.

6. An optically variable security element for securing valuable articles, whose areal expanse defines a z-axis perpendicular thereto, having a reflective areal region that displays at least two appearances that are perceptible from different viewing directions,
- the reflective areal region including two relief structures that are arranged at different height levels in the z-direction and form a lower-lying and a higher-lying relief structure, each of which is furnished with a reflection-increasing coating that follows the relief profile,
- the higher-lying relief structure displaying a first optically variable effect in a first color,
- the lower-lying relief structure being visible through the higher-lying reflection-increasing coating itself, or through grid spaces or gaps in the higher-lying reflection-increasing coating, and displaying a second optically variable effect in a second, different color, and
- the security element being furnished, in an interior layer that is provided contiguously or in some regions, with at least one machine-readable feature substance,
**characterized in that**
- the higher-lying relief structure is formed by an embossing lacquer layer whose embossing lacquer includes at least one machine-readable feature substance and/or **in that** the lower-lying relief structure is formed by an embossing lacquer layer whose embossing lacquer includes at least one machine-readable feature substance.

7. The security element according to at least one of claims 1 to 6, **characterized in that** the at least one machine-readable feature substance forms a code that especially indicates a currency, a series, a denomination and/or a lot of the security element.

8. The security element according to at least one of claims 1 to 7, **characterized in that** the machine-readable feature substances comprise IR-absorbing, IR-transparent, magnetic, electrically conductive and/or luminescent, especially phosphorescent, feature substances.

9. The security element according to at least one of claims 1 to 8, **characterized in that** at least one machine-readable feature substance is present in a printing ink, especially a pigment printing ink.

10. The security element according to at least one of claims 1 to 9, **characterized in that** at least one machine-readable feature substance is present in a vapor-deposited layer.

11. The security element according to at least one of claims 1 to 10, **characterized in that** the higher-lying relief structure and/or the lower-lying relief structure are formed by micromirror arrangements having directionally reflective micromirrors, especially having non-diffractively behaving mirrors, and preferably having flat mirrors, concave mirrors and/or Fresnel-like mirrors.

12. The security element according to at least one of claims 1 to 11, **characterized in that** the higher-lying relief structure displays a first optically variable effect in a first color, and the lower-lying relief structure displays, in the free regions of the areal region, a second optically variable effect in a second, different color.

13. The security element according to at least one of claims 1 to 12, **characterized in that** at least one of the reflection-increasing layers is formed by a reflective color coating, especially by a metalization, a thin-film structure, by a translucent ink backed with a metalization, by a luminescent ink having a metallic mirror coating, by a structural coloration and/or by a nanoparticle ink.

14. The security element according to at least one of claims 1 to 13, **characterized in that** the higher-lying reflection-increasing coating is formed, at least in a sub-region of the areal region, as a regular or irregular grid having grid elements and grid spaces, the dimensions of the grid elements and grid spaces being, in one or both lateral directions, below 140 µm, preferably between 20 µm and 100 µm, especially between 20 µm and 60 µm.

15. The security element according to at least one of claims 1 to 14, **characterized in that** the higher-lying reflection-increasing coating is formed, at least in a sub-region of the areal region, as an effect region in which the lacquer regions and/or the free regions have lateral dimensions of more than 140 µm, preferably of more than 250 µm, further preferably of more than 500 µm and especially of more than 1 mm.

16. The security element according to at least one of claims 1 to 15, **characterized in that** negative markings are formed in the security element by gaps in the lower-lying reflection-increasing coating.

17. A data carrier having an optically variable security element according to at least one of claims 1 to 16.

## Revendications

1. Élément de sécurité optiquement variable, destiné à sécuriser des objets de valeur, dont l'extension superficielle définit un axe Z debout à la perpendiculaire sur celui-ci, pourvu d'une zone de surface réfléchissante, qui montre au moins deux apparences visuelles, identifiables à partir de différentes directions d'observation,
- la zone de surface réfléchissante contenant deux structures en relief , qui dans la direction Z sont placées à différents niveaux de hauteur et constituent une structure en relief située plus bas et une structure en relief située plus haut, qui sont munies chacune d'un revêtement augmentant la réflexion suivant le trajet du relief,
- la structure en relief située plus haut montrant un premier effet optiquement variable dans une première couleur,
- la structure en relief située plus bas étant visible à travers le revêtement même augmentant la réflexion situé plus haut ou à travers des espaces tramés ou des encoches dans le revêtement augmentant la réflexion situé plus haut et montrant un deuxième effet optiquement variable dans une deuxième couleur différente et
- l'élément de sécurité étant muni dans une couche interne prévue à pleine surface ou par endroits d'au moins une substance caractéristique, lisible par machine,
**caractérisé en ce que**
- l'élément de sécurité contient une caractéristique d'authenticité, pourvue de deux différentes substances caractéristiques lisibles par machine, qui sont présentes dans deux couches planes séparées de l'élément de sécurité,
- une première couche pourvue d'une première des deux substances caractéristiques lisibles par machine étant placée en dessous des deux structures en relief et une deuxième couche pourvue d'une deuxième des deux substances caractéristiques étant placée au-dessus des deux structures en relief.

2. Élément de sécurité selon la revendication 1, **caractérisé en ce qu**'au moins une substance caractéristique lisible par machine est intégrée dans la structure de couche générant les différentes apparences visuelles.

3. Élément de sécurité selon au moins l'une quelconque des revendications 1 à 2, **caractérisé en ce que** le revêtement augmentant la réflexion situé plus haut et / ou situé plus bas contiennent à pleine surface ou par endroits au moins une substance caractéristique lisible par machine.

4. Élément de sécurité selon au moins l'une quelconque des revendications 1 à 3, **caractérisé en ce que** la structure en relief située plus haut est constituée d'une couche de laque de gaufrage, dont la laque de gaufrage contient de préférence au moins une substance caractéristique lisible par machine et / ou la structure en relief située plus bas est constituée d'une couche de laque de gaufrage, dont la laque de gaufrage contient de préférence au moins une substance caractéristique lisible par machine.

5. Élément de sécurité selon au moins l'une quelconque des revendications 1 à 4, **caractérisé en ce que** les deux différentes substances caractéristiques lisibles par machine de la caractéristique d'authenticité sont deux substances caractéristiques absorbant les IR, qui absorbent dans différentes gammes d'ondes IR, sont deux substances caractéristiques magnétiques, douées de différentes propriétés magnétiques, notamment d'une coercivité différente ou sont deux substances caractéristiques luminescentes, luminescentes dans un spectre d'émission différent ou excitables à différentes longueurs d'onde.

6. Élément de sécurité optiquement variable, destiné à sécuriser des objets de valeur, dont l'extension superficielle définit un axe Z debout à la perpendiculaire sur celui-ci, pourvu d'une zone de surface réfléchissante, qui montre au moins deux apparences visuelles, identifiables à partir de différentes directions d'observation,
- la zone de surface réfléchissante contenant deux structures en relief , qui dans la direction Z sont placées à différents niveaux de hauteur et constituent une structure en relief située plus bas et une structure en relief située plus haut, qui sont munies chacune d'un revêtement augmentant la réflexion suivant le trajet du relief,
- la structure en relief située plus haut montrant un premier effet optiquement variable dans une première couleur,
- la structure en relief située plus bas étant visible à travers le revêtement même augmentant la réflexion situé plus haut ou à travers des espaces tramés ou des encoches dans le revêtement augmentant la réflexion situé plus haut et montrant un deuxième effet optiquement variable dans une deuxième couleur différente et
- l'élément de sécurité étant muni dans une couche interne prévue à pleine surface ou par endroits d'au moins une substance caractéristique, lisible par machine,
**caractérisé en ce que**
- la structure en relief située plus haut est constituée d'une couche de laque de gaufrage, dont la laque de gaufrage contient de préférence au moins une substance caractéristique lisible par machine et /ou **en ce que** la structure en relief située plus bas est constituée d'une couche de laque de gaufrage, dont la laque de gaufrage contient de préférence au moins une substance caractéristique lisible par machine.

7. Élément de sécurité selon au moins l'une quelconque des revendications 1 à 6, **caractérisé en ce que** l'au moins une substance caractéristique lisible par machine constitue un codage, qui indique notamment une devise, une série, une dénomination et / ou une charge de l'élément de sécurité.

8. Élément de sécurité selon au moins l'une quelconque des revendications 1 à 7, **caractérisé en ce que** les substances caractéristiques lisibles par machine absorbant les IR comprennent des substances caractéristiques transparentes aux IR, magnétiques, conductrices d'électricité et / ou luminescentes, notamment phosphorescentes.

9. Élément de sécurité selon au moins l'une quelconque des revendications 1 à 8, **caractérisé en ce qu'**au moins une substance caractéristique lisible par machine se présente dans une encre d'imprimerie, notamment dans une encre d'imprimerie pigmentée.

10. Élément de sécurité selon au moins l'une quelconque des revendications 1 à 9, **caractérisé en ce qu**'au moins une substance caractéristique lisible par machine se présente sous la forme d'une couche d'application en phase vapeur.

11. Élément de sécurité selon au moins l'une quelconque des revendications 1 à 10, **caractérisé en ce que** la structure en relief située plus haut et / ou la structure en relief située plus bas sont constituées par des systèmes à micromiroirs pourvus de micromiroirs à réflexion orientée, notamment pourvus de miroirs à effet non diffractif et de préférence pourvus de miroirs plans, de miroirs creux et / ou de miroirs de type Fresnel.

12. Élément de sécurité selon au moins l'une quelconque des revendications 1 à 11, **caractérisé en ce que** la structure en relief située plus haut montre un premier effet optiquement variable dans une première couleur et la structure en relief située plus bas, montre dans les zones libres de la zone de surface un deuxième effet optiquement variable dans une deuxième couleur différente.

13. Élément de sécurité selon au moins l'une quelconque des revendications 1 à 12, **caractérisé en ce qu'**au moins l'une des couches augmentant la réflexion est constituée d'un revêtement en couleur réfléchissant, notamment d'une métallisation, d'une structure en couche mince, d'une peinture lasurée déposée sur une métallisation, d'une peinture luminescente, pourvue d'un réfléchissement métallique, d'une peinture texturée et / ou d'une peinture à nanoparticules.

14. Élément de sécurité selon au moins l'une quelconque des revendications 1 à 13, **caractérisé en ce que** le revêtement augmentant la réflexion situé plus haut est constitué au moins dans une zone partielle de la zone de surface sous la forme d'une trame régulière ou irrégulière pourvue d'éléments de trame et d'interstices de trames, les dimensions des éléments de trame et des interstices de trame dans une ou dans les deux directions latérales étant inférieures à 140 µm, se situant de préférence entre 20 µm et 100 µm, notamment entre 20 µm et 60 µm.

15. Élément de sécurité selon au moins l'une quelconque des revendications 1 à 14, **caractérisé en ce que** le revêtement augmentant la réflexion situé plus haut est constitué au moins dans une zone partielle de la zone de surface sous la forme d'une zone à effet, dans laquelle les zones de peinture et / ou les zones libres présentent des dimensions supérieures à 140 µm, de préférence supérieures à 250 µm, de manière plus préférentielle, supérieures à 500 µm et notamment supérieures à 1 mm.

16. Élément de sécurité selon au moins l'une quelconque des revendications 1 à 15, **caractérisé en ce que** dans l'élément de sécurité, des signes distinctifs négatifs sont constitués par des encoches dans le revêtement augmentant la réflexion situé plus bas.

17. Support de données, pourvu d'un élément de sécurité optiquement variable selon au moins l'une quelconque des revendications 1 à 16.
